# EUROPÄISCHE PATENTANMELDUNG

(11) **EP 2 071 418 A1**
(43) Veröffentlichungstag der Anmeldung: **17.06.2009**
(21) Anmeldenummer: 07023860.5
(22) Anmeldetag: 10.12.2007
(51) Int. Cl.: G05B 19/042, G06F 9/46

(54) **Automatisierungsgerät mit mehreren Betriebssystemprofilen und Verfahren zu dessen Betrieb**

(71) Anmelder: SIEMENS AKTIENGESELLSCHAFT, 80333 München (DE)
(72) Erfinder: Graw, Roland, 76479 Steinmauern (DE)

(57) **Zusammenfassung**

Es wird ein Automatisierungsgerät (12) und ein Verfahren zu dessen Betrieb angegeben, wobei im Speicher (24) als Betriebssystemprofile (34-38) eine Mehrzahl von Parameterdatensätzen abrufbar hinterlegt wird, hinterlegt oder hinterlegbar ist und wobei ein Abruf eines Betriebssystemprofils (34-38) eine Anwendung der davon umfassten Parameterdaten (40) als Betriebssystemparameter (32) bewirkt, so dass eine Beeinflussbarkeit der Betriebssystemparameter (32) auch nach einer Auslieferung des Automatisierungsgerätes (12) gegeben ist und für einen Anwender damit eine Möglichkeit zur optimalen Anpassung derselben an eine jeweilige Automatisierungslösung geschaffen ist. Ausgestaltungen der Erfindung beziehen sich auf eine teilautomatische oder automatische Auswahl geeigneter Betriebssystemprofile (34-38), insbesondere durch eine Analyse des Laufzeitverhaltens des Steuerungsprogramms.

## Beschreibung

Die Erfindung betrifft ein Automatisierungsgerät gemäß dem Oberbegriff des Anspruchs 1 sowie ein Verfahren zum Betrieb eines solchen Automatisierungsgerätes gemäß dem Oberbegriff des Anspruchs 5.

Automatisierungsgeräte der eingangs genannten Art sind an sich bekannt.

Der Begriff "Automatisierungsgerät" umfasst sämtliche Geräte, Einrichtungen oder Systeme, also neben z. B. Steuerungen, wie speicherprogrammierbaren Steuerungen, Prozessrechnern, (Industrie-)Computern und dergleichen, auch Antriebssteuerungen, Frequenzumrichter und Ähnliches, wie sie zur Steuerung, Regelung und/oder Überwachung technologischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird. Aus dem Siemens-Katalog ST 70, Ausgabe 1996, Kapitel 3, 4 und 8 ist als Beispiel für ein Automatisierungsgerät eine speicherprogrammierbare Steuerung sowie ein Programmiergerät zum Erstellen eines Steuerungsprogramms für eine derartige speicherprogrammierbare Steuerung bekannt. Wesentliche Bestandteile dieser speicherprogrammierbaren Steuerung sind Baugruppen für zentrale Aufgaben (Zentraleinheit oder CPU-Einheit) sowie Signal-, Funktions- und Kommunikationsbaugruppen. Die Zentraleinheit der speicherprogrammierbaren Steuerung arbeitet während des Steuerbetriebs zyklisch ein Steuerungsprogramm ab, welches ein Programmierer mit einem mit einem Software-Werkzeug versehenen Programmiergerät erstellt und welches zur Lösung einer Automatisierungsaufgabe vorgesehen ist. Während der zyklischen Bearbeitung liest die Zentraleinheit zunächst die Signalzustände an allen physikalischen Prozesseingängen ab und bildet ein Prozessabbild der Eingänge. Das Steuerungsprogramm wird weiter unter Einbeziehung interner Zähler, Merker und Zeiten schrittweise abgearbeitet und schließlich hinterlegt die Zentraleinheit die errechneten oder ermittelten Signalzustände im Prozessabbild der Prozessausgänge, von welchem diese Signalzustände an die physikalischen Prozessausgänge transferiert werden. Solche Steuerungsprogramme umfassen gewöhnlich Software-Funktionsbausteine, die einen Betrieb der Signal- und/oder Funktions- und/oder Kommunikationsbaugruppen ermöglichen.

Zentrale Funktionseinheiten in Automatisierungsgeräten oder -systemen, also z. B. die oben kurz erwähnten Zentraleinheiten speicherprogrammierbarer Steuerungen, sind bezüglich ihrer Leistungsfähigkeit skaliert, wobei sich die Skalierung u. a. durch voreingestellte Systemparameter ergibt, die ein Betriebssystem des Automatisierungsgeräts/-systems beeinflussen und entsprechend im Folgenden als Betriebssystemparameter bezeichnet werden. Als Beispiel für derartige Betriebssystemparameter sind Taskprioritäten, Lastbegrenzungen, Größen von durch einen Anwender nutzbaren Lokaldatenbereichen, usw. zu nennen.

Bisher kann ein Anwender per Projektierung einige wenige Betriebssystemparameter den Anforderungen seiner Automatisierungslösung in Ansehung des jeweiligen Steuerungsprogramms und/oder des technischen Prozesses und der zu dessen Steuerung und/oder Überwachung vorgesehenen Prozessperipherie anpassen. Auf viele Betriebssystemparameter hat der Anwender jedoch keinen Zugriff, da deren einzelne freie Einstellbarkeit aufgrund der Vielzahl der sich ergebenden Kombinationsmöglichkeiten und daraus resultierendem immensen Testaufwand systemtechnisch nicht abzusichern wäre. Gleichwohl akzeptiert man damit bisher, dass einzelne Steuerungsprogramme mit zwar sicheren, weil konservativen Betriebssystemparametern ausgeführt werden, die jedoch für die jeweilige Kombination aus Automatisierungsgerät, Steuerungsprogramm und zu steuerndem technischen Prozess nicht optimal sind. Außerdem wird, selbst wenn für eine erste Version einer Automatisierungslösung günstige oder gar optimale Betriebssystemparameter vorliegen, bei Erweiterungen der Automatisierungslösung evtl. eine Neueinstellung einzelner oder aller Betriebssystemparameter nötig. Der Anwender kann hier in Bezug auf die für Veränderungen erreichbaren Betriebssystemparameter lediglich empirisch vorgehen und ist normalerweise zum einen wegen der mangelnden Systemunterstützung und zum anderen wegen der Vielzahl der sich ergebenden Kombinationsmöglichkeiten überfordert.

Nach bestem Wissen der Anmelderin gibt es für das oben skizzierte Problem derzeit keine systematische Lösung. Lösungsansätze beschränken sich im Wesentlichen darauf, dass der Anwender das jeweilige Steuerungsprogramm analysiert und die ihm für Veränderungen zugänglichen Betriebssystemparameter nach jeweiligem Gutdünken einstellt. Aufgrund der damit verbundenen Probleme, wie oben erwähnt, ist für Automatisierungsgeräte ein üblicherweise auf deren Leistungsklasse abgestelltes, z. B. anhand der adressierbaren Ein- und Ausgänge, z. B. anhand der Vernetzungsmöglichkeiten, der Prozessorleistung des Speichers und dergleichen, "mittleres Betriebssystemprofil" mit konservativen Betriebssystemparametern voreingestellt, das nach den Erwartungen des jeweiligen Herstellers des Automatisierungsgerätes für die weit überwiegende Anzahl von Automatisierungslösungen ein günstiges Laufzeitverhalten bietet.

Der Erfindung liegt entsprechend als Aufgabe zugrunde, ein Automatisierungsgerät und ein Verfahren zu dessen Betrieb anzugeben, bei dem die oben genannten Nachteile vermieden oder zumindest hinsichtlich ihrer Auswirkungen reduziert werden.

Diese Aufgabe wird erfindungsgemäß mit den Merkmalen der Ansprüche 1 und 5 gelöst. Dazu ist bei einem Automatisierungsgerät mit einer Verarbeitungseinheit, also z. B. einem Prozessor oder dergleichen, und einem Speicher, wobei in dem Speicher einerseits ein Betriebssystem hinterlegt ist und andererseits ein Steuerungsprogramm, also ein Anwenderprogramm zur Steuerung und/oder Überwachung eines technischen Prozesses, hinterlegbar ist, wobei einzelne Eigenschaften des Betriebssystems durch Betriebssystemparameter festgelegt und/oder beeinflussbar sind, vorgesehen, dass im Speicher als Betriebssystemprofile eine Mehrzahl von Parameterdatensätzen abrufbar hinterlegt oder hinterlegbar ist und dass eine Funktionseinheit bei einem Abruf eines Betriebssystemprofils eine Anwendung der davon umfassten Parameterdaten als Betriebssystemparameter bewirkt. Entsprechend ist für das Verfahren zum Betrieb eines einen Speicher und eine Verarbeitungseinheit umfassenden Automatisierungsgerätes, wobei im Speicher ein Betriebssystem und ein Anwenderprogramm hinterlegt sind und wobei einzelne Eigenschaften des Betriebssystems zur Laufzeit durch Betriebssystemparameter beeinflussbar sind, vorgesehen, dass im Speicher als Betriebssystemprofile eine Mehrzahl von Parameterdatensätzen abrufbar hinterlegt wird oder hinterlegt ist und dass bei einem Abruf eines Betriebssystemprofils eine Funktionseinheit eine Anwendung der von dem Betriebssystemprofil umfassten Parameterdaten als Betriebssystemparameter bewirkt.

Der Vorteil der Erfindung besteht darin, dass neben dem bisher einzigen, fest voreingestellten, oben genannten "mittleren Profil" eine Mehrzahl von Betriebssystemprofilen abrufbar zur Verfügung steht. Jedes Betriebssystemprofil umfasst einen Parameterdatensatz, der bei Abruf des jeweiligen Profils eine Anwendung der davon umfassten Parameterdaten als Betriebssystemparameter bewirkt. Für diesen letzten Aspekt kann im einfachsten Fall ein Kopieren der Parameterdaten an die Adressen der entsprechenden Betriebssystemparameter vorgesehen sein. Alle Änderungen werden vom Betriebssystem "prozessverträglich" eingeplant und durchgeführt (Wahl geeigneter Systemkontrollpunkte, etc.). Der Anwender wählt also lediglich ein Betriebssystemprofil aus, das ggf. um eine instruktive Beschreibung ergänzt ist oder werden kann, so dass der Anwender die Eignung des jeweiligen Profils für die Situation entsprechend seiner Automatisierungslösung erkennen kann, und das Automatisierungsgerät gemäß der Erfindung oder das nach dem Verfahren gemäß der Erfindung arbeitende Automatisierungsgerät enthebt den Anwender von der Notwendigkeit, einzelne Betriebssystemparameter und deren Speicherort identifizieren zu müssen und neue Daten eintragen zu müssen, die ggf. noch einer strikt einzuhaltenden Syntax genügen müssen. Je nach Anzahl der für das jeweilige Automatisierungsgerät vorgehaltenen Betriebssystemprofile kann eine feingranulare Abstimmung auf unterschiedlichste Anwendungsfälle bereits durch den Automatisierungsgerätehersteller vorgesehen sein, so dass für den Anwender lediglich die Auswahl eines geeigneten Profils verbleibt.

Nach der Auswahl eines solchen geeigneten Profils wird durch Anwendung der davon umfassten Parameterdaten als Betriebssystemparameter erreicht, dass das jeweilige Steuerungsprogramm unter optimalen Randbedingungen läuft. Bei einem stark kommunikationslastigen Steuerungsprogramm sind dann also entsprechend die Betriebssystemparameter so eingestellt, dass sich eine optimale Verfügbarkeit des Automatisierungsgerätes für Kommunikationsaufgaben ergibt, während bei einem Steuerungsprogramm, das mathematisch aufwendige Regelungsalgorithmen umfasst, eine Verfügbarkeit für Kommunikationsaufgaben eher im Hintergrund steht und durch Auswahl entsprechender Betriebssystemparameter sichergestellt wird, dass die Rechenleistung des jeweiligen Prozessors vornehmlich für die Regelungsalgorithmen zur Verfügung steht. Neben durch die Betriebssystemparameter kodierten Leistungsmerkmalen, wie oben exemplarisch anhand kommunikationslastiger oder numerisch aufwendiger Steuerungsprogramme beschrieben, können Betriebssystemparameter auch ein funktionales Verhalten des Betriebssystems beeinflussen, etwa eine Reaktion auf Alarme, Fehler etc.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn das Automatisierungsgerät Laufzeitanalysemittel zur Analyse eines Laufzeitverhaltens des Steuerungsprogramms unter Geltung der jeweils aktuellen Betriebssystemparameter, also z. B. unter Geltung von aus einem abgerufenen Betriebssystemprofil hervorgegangenen Betriebssystemparametern, aufweist, kann die Eignung einzelner Betriebssystemprofile für das jeweilige Steuerungsprogramm systemunterstützt überprüft werden. Der Anwender kann bei einem derartigen Gerät also sukzessive einzelne Betriebssystemprofile auswählen, bei denen er von einer grundsätzlichen Eignung für die Automatisierungslösung ausgeht. Nachher kann aufgrund von dem oder den Laufzeitanalysemitteln generierten Ergebnissen für jedes Profil überprüft werden, ob tatsächlich eine optimale Eignung für die jeweilige Automatisierungslösung gegeben ist. Der Anwender wählt dann nach Durchsicht der von den Laufzeitanalysemitteln generierten Ergebnisse in einem letzten Schritt das als optimal identifizierte Betriebssystemprofil aus, so dass das Steuerungsprogramm zukünftig unter Verwendung der davon umfassten Betriebssystemparameter ausgeführt wird.

Dieser Vorgang kann auch weiter automatisiert werden, indem das Automatisierungsgerät Auswahlmittel zum automatischen Abruf eines Betriebssystemprofils umfasst. Derartige Auswahlmittel umfassen z. B. die Funktionalität eines so genannten Profilers, sind also in der Lage, Einzelaspekte der Funktionalität des Steuerungsprogramms zu analysieren. Als Resultat des automatischen Aufrufs eines solchen Auswahlmittels ergibt sich z. B., in welchem Verhältnis beim jeweiligen Steuerungsprogramm Kommunikationsbedarf und Rechenleistungsbedarf stehen. Bei einem Steuerungsprogramm mit einem stark erhöhten Kommunikationsbedarf kommen entsprechend nur solche Betriebssystemprofile in Betracht, die einem stark erhöhten Kommunikationsbedarf Rechnung tragen. Zu diesem Zweck weisen die Betriebssystemprofile automatisch auswertbare Bezeichner auf, die dem Auswahlmittel den automatischen Abruf eines Betriebssystemprofils in Ansehung des jeweiligen Steuerungsprogramms erlauben.

Schließlich lassen sich beide vorgenannten Aspekte in einem automatischen Ablauf kombinieren, derart, dass das Automatisierungsgerät Mittel zur automatischen Aktivierung der Analyse des Laufzeitverhaltens und Mittel, die anhand dabei erhältlicher Ergebnisse zum automatischen Abruf eines Betriebssystemprofils bestimmt sind, umfasst. Dann ist der Anwender von jeder Notwendigkeit eines Eingriffs enthoben. Beim Aufspielen eines Steuerungsprogramms eines Automatisierungsgerätes wird dann zunächst das Laufzeitverhalten des Steuerungsprogramms oder bereits vor dessen Laufzeit ein Kommunikations-, Rechenleistungsbedarf, etc. durch eine ggf. von den Laufzeitanalysemitteln umfasste Funktionalität nach Art eines Profilers analysiert und in Ansehung der dabei erhaltenen Ergebnisse das Auswahlmittel zum automatischen Abruf eines geeigneten Betriebssystemprofils aktiviert.

Selbstredend bezieht sich die Erfindung auch auf korrespondierende verfahrensmäßige Realisierungen der oben beschriebenen vorteilhaften Ausgestaltungen. Schließlich bezieht sich die Erfindung auch auf ein Computerprogramm mit durch einen Computer ausführbaren Programmcodeanweisungen zur Implementierung des erfindungsgemäßen Verfahrens sowie ggf. dessen Ausgestaltungen und auf ein Computerprogrammprodukt mit einem durch einen Computer ausführbaren derartigen Computerprogramm.

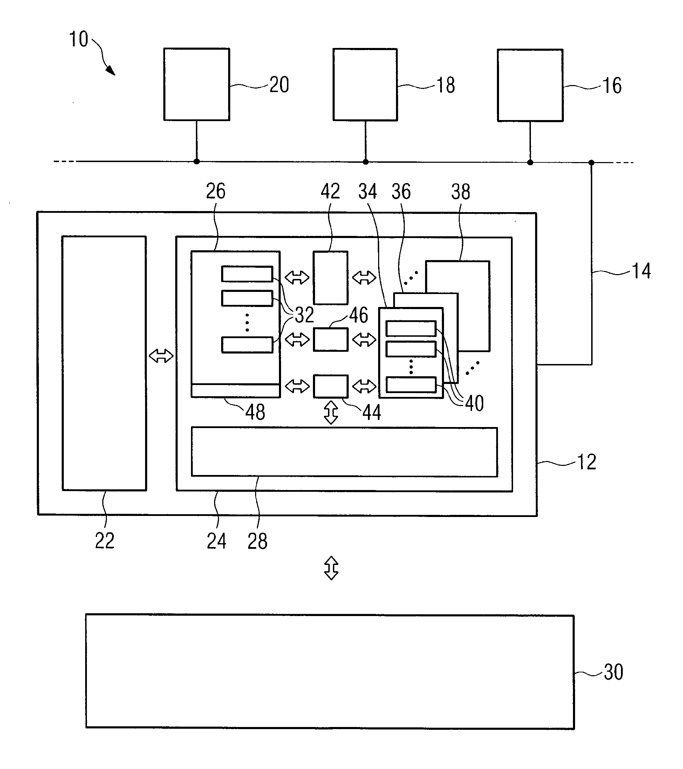

Nachfolgend wird ein Ausführungsbeispiel der Erfindung anhand der Zeichnung näher erläutert.

Darin zeigt die einzige
- Figur: ein vereinfachtes Automatisierungssystem mit einer Mehrzahl von Automatisierungsgeräten zur Steuerung und/oder Überwachung eines technischen Prozesses.

Die einzige Figur zeigt ein insgesamt mit 10 bezeichnetes Automatisierungssystem, das zumindest ein Automatisierungsgerät 12 umfasst und ggf. über eine kommunikative Verbindung, z. B. einen Bus 14, insbesondere einen Feldbus, mit weiteren Automatisierungsgeräten 16, 18, 20 kommunikativ verbunden ist.

Das Automatisierungsgerät 12 umfasst eine Verarbeitungseinheit nach Art eines Prozessors 22 oder dergleichen sowie einen Speicher 24. In dem Speicher 24 ist ein Betriebssystem 26 hinterlegt. Des Weiteren ist der Speicher 24 für die Hinterlegung eines Steuerungsprogramms 28 vorgesehen, das z. B. im Auslieferungszustand des Automatisierungsgeräts 12 noch nicht vorhanden ist und erst von einem Anwender in Ansehung eines Automatisierungsproblems, also der Aufgabe, einen nur schematisch vereinfacht dargestellten technischen Prozess 30 steuern und/oder überwachen zu müssen, individuell erstellt wird. Das Betriebssystem 26 ist dagegen bereits zum Auslieferungszeitpunkt des Automatisierungsgeräts 12 im Speicher 24 hinterlegt, kann aber später im Sinne von Aktualisierungen und dergleichen ggf. verändert werden. Einzelne Eigenschaften des Betriebssystems 26 sind zur Laufzeit, also während das Automatisierungsgerät 12 sich in Betrieb befindet, insbesondere wenn durch den Prozessor 22 das Steuerungsprogramm 28 ausgeführt wird, durch Betriebssystemparameter 32 beeinflussbar.

Gemäß der Erfindung ist vorgesehen, dass im Speicher 24 als Betriebssystemprofile 34, 36, 38 eine Mehrzahl von Parameterdatensätzen abrufbar hinterlegt wird, ist oder hinterlegbar ist. Jedes Betriebssystemprofil 34-38 umfasst Parameterdaten 40, die bei Abruf eines Betriebssystemprofils 34-38 als Betriebssystemparameter 32 verwendbar sind. Dazu ist eine Funktionseinheit 42 vorgesehen, die bei einem Aufruf eines Betriebsystemprofils 34-38 eine Anwendung der davon umfassten Parameterdaten 40 als Betriebssystemparameter 32 bewirkt. Die Funktionseinheit 42 ist innerhalb des Speichers 24 dargestellt, wodurch angezeigt werden soll, dass die Funktionseinheit üblicherweise in Software implementiert ist und insoweit ein Zugriff auf die in dem Speicher 24 vorgehaltenen Betriebssystemprofile 34-38 und die gleichfalls im Speicher 24 hinterlegten Betriebssystemparameter 32 entsprechend leicht möglich ist.

Die Funktionseinheit 42 kann als von einem Anwender aufrufbar ausgeführt sein, derart, dass bei deren Aufruf an einem dem Automatisierungsgerät 12 mittel- oder unmittelbar zugeordneten Anzeigegerät nach Art eines Monitors oder dergleichen (nicht dargestellt) einzelne oder alle Betriebssystemprofile 34-38 zur Auswahl dargestellt werden, wobei für eine leichte Identifizierbarkeit der einzelnen Betriebssystemprofile 34-38 eine diesen jeweils zugeordnete Beschreibung oder dergleichen, die die mit den davon umfassten Parameterdaten 40 intendierten oder erreichbaren Resultate kurz erläutert, angezeigt wird.

Neben dieser im Wesentlichen manuellen Beeinflussung der Betriebssystemparameter 32, bei der der Anwender durch die Funktionalität der Funktionseinheit 42 derart unterstützt wird, dass diese die verfügbaren Betriebssystemprofile 34-38 präsentiert, einen Abruf eines Betriebssystemprofils 34-38 ermöglicht und bei Abruf eines Betriebssystemprofils 34-38 eine Anwendung der von dem ausgewählten Betriebssystemprofil 34-38 umfassten Parameterdaten 40 als Betriebssystemparameter 32 bewirkt, ist für Ausgestaltungen des Automatisierungsgerätes sowie eines mit dem Automatisierungsgerät oder durch das Automatisierungsgerät 12 ausführbaren Verfahrens eine teilautomatisierte oder automatisierte Optimierung der Betriebssystemparameter 32 vorgesehen, wobei dafür vorgesehene Mittel in der Figur ebenfalls dargestellt sind, entsprechend der vorausgeschickten Erläuterungen jedoch als optional anzusehen sind.

Danach umfasst das Automatisierungsgerät 12 auch Laufzeitanalysemittel 44, wobei das oder die bevorzugt in Software implementierten Laufzeitanalysemittel 44 zur Analyse eines Laufzeitverhaltens des Steuerungsprogramms 28 unter Geltung der aktuellen Betriebssystemparameter 32 oder unter Geltung von aus einem abgerufenen Betriebssystemprofil 34-38 hervorgegangenen Betriebssystemparametern 32 vorgesehen ist bzw. sind. Das oder die Laufzeitanalysemittel 44 erzeugen als Ergebnis der Analyse des Laufzeitverhaltens des Steuerungsprogramms 28 diesbezügliche Messwerte, Indikatoren oder dergleichen, z. B. ein Maß für die Prozessorauslastung, ein Maß für eine Verwendung von Kommunikationsfunktionen, z. B. zur Interaktion mit anderen Automatisierungsgeräten 16-20, usw. Wenn ein Anwender durch Verwendung der Funktionseinheit 42 nacheinander mehrere grundsätzlich passende Betriebssystemprofile 34-38 abruft und für jede sich danach ergebende Kombination neuer oder veränderter Betriebssystemparameter 32 das oder die Laufzeitanalysemittel 44 zur Analyse des Laufzeitverhaltens des Steuerungsprogramms 28 unter Geltung von aus dem jeweils abgerufenen Betriebssystemprofil 34-38 hervorgegangenen Betriebssystemparametern 32 verwendet, kann der Anwender durch Vergleich der dabei erhaltenen Ergebnisse oder Indikatoren entscheiden, welches der grundsätzlich in Betracht kommenden Betriebssystemprofile 34-38 für die Automatisierungslösung, also die Kombination aus Automatisierungsgeräten 12, Automatisierungsgeräten 16-20, Steuerungsprogramm 28 und technischem Prozess 30, optimal geeignet ist.

Weiter kann vorgesehen sein, dass das Automatisierungsgerät Auswahlmittel 46 zum automatischen Abruf eines Betriebssystemprofils 34-38 umfasst. Ein automatischer Abruf eines Betriebssystemprofils 34-38 ist dann sinnvoll, wenn Informationen im Hinblick auf eine Erkennbarkeit einer besonderen Eignung eines Betriebssystemprofils 34-38 für die jeweilige Automatisierungslösung gegeben sind. Dazu kann entweder das Auswahlmittel 46 selbst oder das Laufzeitanalysemittel 44 oder ein weiteres, nicht dargestelltes Funktionselement die notwendigen Daten liefern. Als verwendbare Daten kommen hier z. B. Daten in Betracht, wie sie durch Analyse des Steuerungsprogramms 28 nach Art eines Profilings erhalten werden können. Eine solche Analyse ist nicht notwendig eine Laufzeitanalyse und kann deswegen funktional auch anderen Mitteln als dem oder den Laufzeitanalysemitteln 44 zugeordnet sein. Allerdings kommen genauso die Ergebnisse oder Indikatoren, die von dem oder jedem Laufzeitanalysemittel 44 generiert werden oder generierbar sind, für eine Verwendung durch das oder die Auswahlmittel 46 in Betracht. Wichtig ist, dass das oder die Auswahlmittel 46 Informationen z. B. über einen Leistungsbedarf des Steuerungsprogramms 28 in Relation zu einem diesbezüglichen Beitrag durch ein Betriebssystemprofil 34-38 setzen kann bzw. können. Wenn sich durch eine Laufzeitanalyse oder ein Profiling des Steuerungsprogramms 28 z. B. ein erhöhter Rechenleistungsbedarf ergibt und eines der Betriebssystemprofile 34-38 als für Situationen mit erhöhtem Rechenleistungsbedarf gekennzeichnet ist, kann das Auswahlmittel 46 anhand dieser Daten die Auswahl des jeweiligen Betriebssystemprofils 34-38 treffen und eine Verwendung der von dem Betriebssystemprofil 34-38 umfassten Parameterdaten 40 als Betriebssystemparameter 32 automatisch bewirken. Eine Kennzeichnung der Betriebssystemprofile 34-38 in dieser Hinsicht kann dabei auf Basis einer Vielzahl von Möglichkeiten erfolgen, wobei hier nur exemplarisch die Zuordnung geeigneter Attribute, also Speicherinhalten, die ggf. geeignet maskierbar sind, erwähnt werden soll.

Die Einheiten 42, 44, 46 können auch als Bestandteil des Betriebssystems 26 aufgefasst werden. Sie fungieren als Anwenderschnittstelle oder als Bestandteile einer solchen Anwenderschnittstelle für ein an den Bus 14 anschließbares, nicht dargestelltes Bediengerät (Projektier-/Programmiergerät).

Zum quasi vollautomatischen Abrufen eines Betriebssystemprofils 34-38 ist des Weiteren ein Mittel 48 zur automatischen Aktivierung der Analyse des Laufzeitverhaltens vorgesehen, das anhand dabei erhältlicher Ergebnisse zum automatischen Abruf eines Betriebssystemprofils bestimmt ist. Das vorgenannte Mittel 48 ist in der Figur als Bestandteil des Betriebssystems 26 gezeigt, kann jedoch auch unabhängig von dem Betriebssystem 26 implementiert werden. Mit der Verfügbarkeit eines Steuerungsprogramms 28 oder im Zusammenhang mit einem Aufruf des Steuerungsprogramms 28 zur Ausführung durch den Prozessor 22 aktiviert das Mittel 48 zunächst das oder die Laufzeitanalysemittel 44 sowie ggf. eine Funktionalität, die nach Art eines Profilings weitere Informationen zum Leistungsbedarf und dergleichen des Steuerungsprogramms 28 bereitstellt. Danach und in Ansehung der bisher erhaltenen Ergebnisse oder Indikatoren aktiviert das Mittel 48 das oder die Auswahlmittel 46, die einen automatischen Abruf eines Betriebssystemprofils 34-38 bewirken. Als Resultat arbeitet das Automatisierungsgerät 12 bei der Ausführung des Steuerungsprogramms 28 mit im Hinblick auf die jeweilige Automatisierungslösung optimierten Betriebssystemparametern 32.

Zusammenfassend lässt sich die vorliegende Erfindung kurz wie folgt beschreiben: Es wird ein Automatisierungsgerät und ein Verfahren zu dessen Betrieb angegeben, wobei im Speicher 24 als Betriebssystemprofile 34-38 eine Mehrzahl von Parameterdatensätzen abrufbar hinterlegt wird, hinterlegt oder hinterlegbar ist und wobei ein Abruf eines Betriebssystemprofils 34-38 eine Anwendung der davon umfassten Parameterdaten 40 als Betriebssystemparameter 32 bewirkt, so dass eine Beeinflussbarkeit der Betriebssystemparameter 32 auch nach einer Auslieferung des Automatisierungsgerätes 12 gegeben ist und für einen Anwender damit eine Möglichkeit zur optimalen Anpassung derselben an eine jeweilige Automatisierungslösung geschaffen ist. Ausgestaltungen der Erfindung beziehen sich auf eine teilautomatische oder automatische Auswahl geeigneter Betriebssystemprofile 34-38.

## Patentansprüche

1. Automatisierungsgerät (12) mit einer Verarbeitungseinheit und einem Speicher (24), wobei in dem Speicher (24) einerseits ein Betriebssystem (26) hinterlegt ist und andererseits ein Steuerungsprogramm (28) hinterlegbar ist,
wobei einzelne Eigenschaften des Betriebssystems (26) zur Laufzeit durch Betriebssystemparameter (32) beeinflussbar sind,
**gekennzeichnet durch**
eine im Speicher (24) als Betriebssystemprofile (34, 36, 38) abrufbar hinterlegte oder hinterlegbare Mehrzahl von Parameterdatensätzen und
eine Funktionseinheit, die bei einem Abruf eines Betriebssystemprofils (34-38) eine Anwendung der davon umfassten Parameterdaten als Betriebssystemparameter (32) bewirkt.

2. Automatisierungsgerät nach Anspruch 1,
mit Laufzeitanalysemitteln (44) zur Analyse eines Laufzeitverhaltens des Steuerungsprogramms (28) unter Geltung von aus einem abgerufenen Betriebssystemprofil (34-38) hervorgegangenen Betriebssystemparametern (32).

3. Automatisierungsgerät nach Anspruch 1 oder 2,
mit Auswahlmitteln (46) zum automatischen Abruf eines Betriebssystemprofils.

4. Automatisierungsgerät nach Anspruch 2 und 3,
mit Mitteln (48) zur automatischen Aktivierung der Analyse des Laufzeitverhaltens und Mitteln (48), die anhand dabei erhältlicher Ergebnisse zum automatischen Abruf eines Betriebssystemprofils (34-38) bestimmt sind.

5. Verfahren zum Betrieb eines einen Speicher (24) und eine Verarbeitungseinheit umfassenden Automatisierungsgerätes (12), wobei in dem Speicher (24) ein Betriebssystem (26) und ein Steuerungsprogramm (28) hinterlegt sind,
wobei einzelne Eigenschaften des Betriebssystems (26) zur Laufzeit durch Betriebssystemparameter (32) beeinflussbar sind,
**dadurch gekennzeichnet,**
**dass** im Speicher (24) als Betriebssystemprofile (34-38) eine Mehrzahl von Parameterdatensätzen (34-38) abrufbar hinterlegt wird oder hinterlegt ist und
**dass** bei einem Abruf eines Betriebssystemprofils (34-38) eine Funktionseinheit (42) eine Anwendung der von dem Betriebssystemprofil (34-38) umfassten Parameterdaten als Betriebssystemparameter (32) bewirkt.

6. Verfahren nach Anspruch 5,
wobei durch Laufzeitanalysemittel (44) eine Analyse eines Laufzeitverhaltens des Steuerungsprogramms (28) unter Geltung von aus einem abgerufenen Betriebssystemprofil (34-38) hervorgegangenen Betriebssystemparametern (32) erfolgt.

7. Verfahren nach Anspruch 5 oder 6,
wobei durch Auswahlmittel (46) ein automatischer Abruf eines Betriebssystemprofils erfolgt.

8. Verfahren nach Anspruch 6 und 7,
wobei das oder die Laufzeitanalysemittel (44) sowie das oder die Auswahlmittel (46) automatisch nacheinander aktiviert werden,
wobei für das oder die Auswahlmittel (46) zur Auswahl eines Betriebssystemprofils (34-38) durch das oder die Laufzeitanalysemittel (44) generierte Laufzeitinformationen zugrunde gelegt werden.

9. Computerprogramm mit durch einen Computer ausführbaren Programmcodeanweisungen zur Implementierung des Verfahrens nach einem der Ansprüche 5 bis 8, wenn das Computerprogramm auf einem Computer ausgeführt wird.

10. Computerprogrammprodukt, insbesondere Speichermedium, mit einem durch einen Computer ausführbaren Computerprogramm gemäß Anspruch 9.

## Geänderte Patentansprüche

### Geänderte Patentansprüche gemäss Regel 137(2) EPÜ.

**1.** Automatisierungsgerät (12) mit einer Verarbeitungseinheit und einem Speicher (24), wobei in dem Speicher (24) einerseits ein Betriebssystem (26) hinterlegt ist und andererseits ein Steuerungsprogramm (28) hinterlegbar ist,
wobei einzelne Eigenschaften des Betriebssystems (26) während einer Laufzeit durch Betriebssystemparameter (32) beeinflussbar sind,
**gekennzeichnet durch**
eine im Speicher (24) als Betriebssystemprofile (34, 36, 38) abrufbar hinterlegte oder hinterlegbare Mehrzahl von Parameterdatensätzen und
eine Funktionseinheit, die bei einem Abruf eines Betriebssystemprofils (34-38) eine Anwendung der davon umfassten Parameterdaten als Betriebssystemparameter (32) bewirkt.

**2.** Automatisierungsgerät nach Anspruch 1,
mit Laufzeitanalysemitteln (44) zur Analyse eines Laufzeitverhaltens des Steuerungsprogramms (28) unter Geltung von aus einem abgerufenen Betriebssystemprofil (34-38) hervorgegangenen Betriebssystemparametern (32).

**3.** Automatisierungsgerät nach Anspruch 1 oder 2,
mit Auswahlmitteln (46) zum automatischen Abruf eines Betriebssystemprofils.

**4.** Automatisierungsgerät nach Anspruch 2 und 3,
mit Mitteln (48) zur automatischen Aktivierung der Analyse des Laufzeitverhaltens und Mitteln (48), die anhand dabei erhältlicher Ergebnisse zum automatischen Abruf eines Betriebssystemprofils (34-38) bestimmt sind.

**5.** Verfahren zum Betrieb eines einen Speicher (24) und eine Verarbeitungseinheit umfassenden Automatisierungsgerätes (12), wobei in dem Speicher (24) ein Betriebssystem (26) und ein Steuerungsprogramm (28) hinterlegt sind,
wobei einzelne Eigenschaften des Betriebssystems (26) während einer Laufzeit durch Betriebssystemparameter (32) beeinflussbar sind,
**dadurch gekennzeichnet,**
**dass** im Speicher (24) als Betriebssystemprofile (34-38) eine Mehrzahl von Parameterdatensätzen (34-38) abrufbar hinterlegt wird oder hinterlegt ist und
**dass** bei einem Abruf eines Betriebssystemprofils (34-38) eine Funktionseinheit (42) eine Anwendung der von dem Betriebssystemprofil (34-38) umfassten Parameterdaten als Betriebssystemparameter (32) bewirkt.

**6.** Verfahren nach Anspruch 5,
wobei durch Laufzeitanalysemittel (44) eine Analyse eines Laufzeitverhaltens des Steuerungsprogramms (28) unter Geltung von aus einem abgerufenen Betriebssystemprofil (34-38) hervorgegangenen Betriebssystemparametern (32) erfolgt.

**7.** Verfahren nach Anspruch 5 oder 6,
wobei durch Auswahlmittel (46) ein automatischer Abruf eines Betriebssystemprofils erfolgt.

**8.** Verfahren nach Anspruch 6 und 7,
wobei das oder die Laufzeitanalysemittel (44) sowie das oder die Auswahlmittel (46) automatisch nacheinander aktiviert werden,
wobei für das oder die Auswahlmittel (46) zur Auswahl eines Betriebssystemprofils (34-38) durch das oder die Laufzeitanalysemittel (44) generierte Laufzeitinformationen zugrunde gelegt werden.

**9.** Computerprogramm mit durch einen Computer ausführbaren Programmcodeanweisungen zur Implementierung des Verfahrens nach einem der Ansprüche 5 bis 8, wenn das Computerprogramm auf einem Computer ausgeführt wird.

**10.** Computerprogrammprodukt, insbesondere Speichermedium, mit einem durch einen Computer ausführbaren Computerprogramm gemäß Anspruch 9.
